# FASCICULE DE BREVET EUROPEEN

(11) **EP 3 442 850 B1**
(45) Date de publication et mention de la délivrance du brevet: **06.05.2020**
(21) Numéro de dépôt: 17715233.7
(22) Date de dépôt: 14.03.2017
(51) Int. Cl.: B62D 21/15, B62D 25/20

(54) **PLANCHER AVEC DES MOYENS ANTI SOUSMARINAGE**
BODEN MIT ANTI-DURCHTAUCHMITTELN
FLOOR WITH ANTI-SUBMARINING MEANS

(30) Priorité: 14.04.2016 FR 1653292
(43) Date de publication de la demande: 20.02.2019
(73) Titulaire: PSA AUTOMOBILES S.A., 78300 Poissy (FR)
(72) Inventeur: ALPY, Eric, 25460 Etupes (FR); FONFREDE, Stephane, 90000 Belfort (FR); DURET, Florence, 25350 Mandeure (FR); JIDAR, Abdelhakim, 91300 Massy (FR); DIEULOT, Bertrand, 25720 Avanne Aveney (FR)
(86) Numéro de dépôt international: PCT/FR2017/050580
(87) Numéro de publication internationale: WO 2017/178719

(56) Documents cités:
- WO-A1-2014/188247
- JP-A- 2007 210 368
- JP-A- 2013 082 392

## Description

L'invention a trait au domaine des véhicules automobiles, plus particulièrement à la problématique de l'absorption d'un choc latéral d'un véhicule automobile. Plus particulièrement encore, l'invention a trait à une structure de plancher de véhicule.

Les véhicules ayant une garde au sol limitée et un bloc moteur à l'avant du véhicule ont habituellement un plancher formant un tunnel de manière à créer un passage pour notamment un tuyau d'échappement de l'avant vers l'arrière du véhicule. Les longerons de bas de caisse et les traverses qui joignent le tunnel avec les longerons forment aussi classiquement la structure du plancher. Ces traverses forment généralement des supports pour les sièges du véhicule. Les véhicules ayant des assises basses ont par ailleurs habituellement un profil de plancher peu épais.

La réalisation d'une structure de véhicule doit satisfaire à de nombreuses prestations notamment des tests de choc. Parmi ces tests il existe le test de choc latéral, notamment le test contre un poteau, qui impacte en particulier la structure du plancher du véhicule.

Il est donc souhaitable de réaliser une structure de plancher qui puisse absorber l'énergie d'un tel choc latéral.

Le document JP2007210368 décrit une structure latérale de carrosserie véhicule apte à supporter une charge transversale appliquée sur le côté du véhicule.

Or un nouveau protocole de test de choc latéral consiste en ce que le véhicule rencontre un poteau à 32km/h avec un angle de choc de 75° par rapport à la direction longitudinale du véhicule. Ce protocole est plus sévère en ce qui concerne la vitesse de choc, il génère également de nouvelles formes de contraintes pour la structure, en particulier, de par la direction du choc qui est intermédiaire entre un choc frontal et un choc transversal.

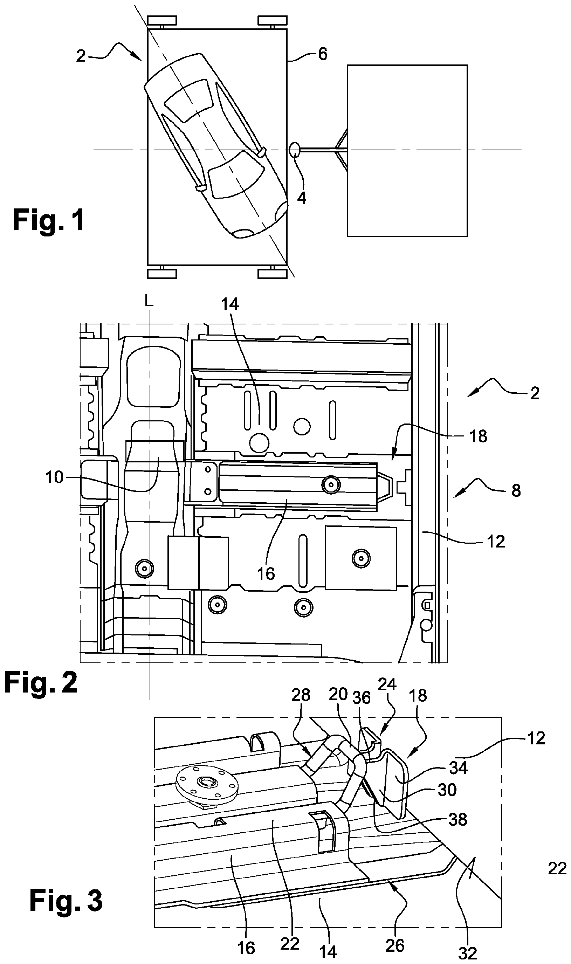

La figure 1 illustre un exemple des conditions d'un tel test de choc latéral d'un véhicule automobile 2 contre un poteau fixe 4. Lors de ce nouveau test, le véhicule 2 est monté sur une plateforme 6 lancée à 32km/h contre le poteau 4, le véhicule 2 étant orienté de manière à former un angle de 75° avec la direction de déplacement de la plateforme, et positionné de façon à ce qu'il percute le poteau 4 au niveau du conducteur. La déformation de l'habitacle engendrant des risques importants de blessures, notamment au niveau du thorax ou de l'abdomen, le test vise à donner une notation, notamment en lien avec l'amplitude de la déformation du plancher ; l'effondrement des traverses est en particulier à éviter car il augmente généralement drastiquement l'amplitude de déformation.

L'invention a pour objectif de proposer une solution palliant au moins un inconvénient de l'état de l'art susmentionné. Plus particulièrement, l'invention a pour objectif de proposer une solution de plancher diminuant la déformation et augmentant la notation lors d'un test de choc poteau à 75°.

L'invention a pour objet un plancher de véhicule automobile comprenant: un tunnel central; au moins un longeron disposé le long et à distance du tunnel central ; au moins une paroi s'étendant transversalement depuis le tunnel central jusqu'au longeron ou un des longerons; et un ou plusieurs profilés s'étendant transversalement sur la ou au moins une des parois entre le tunnel et le longeron correspondant ; remarquable en ce qu'il comprend, en outre, des moyens anti-sous-marinage du ou d'au moins un des profilés sous le longeron correspondant en cas de choc latéral, lesdits moyens étant aptes à réaliser une liaison entre le longeron et le ou les profilés lors dudit choc.

Par sous-marinage du ou d'au moins un des profilés on entend un phénomène qui se produit en cas de collision du véhicule suivant une direction avec une composante transversale et consistant à ce que le profilé glisse sous le longeron.

Selon un mode avantageux de l'invention, les moyens anti-sous-marinage sont situés en hauteur par rapport au(x) profilé(s).

Selon un mode avantageux de l'invention, les moyens anti-sous-marinage comprennent un fil métallique soudé sur une portion principale du ou de chacun des profilés et au moins un crochet sur le longeron correspondant, ou vice versa, ledit fil étant conformé de sorte à s'engager avec ledit crochet lors du choc latéral. Le fil métallique peut en effet être fixé au longeron et le crochet au profilé, ou inversement.

Selon un mode avantageux de l'invention, le ou chacun des fils métalliques forme, à l'extrémité du profilé située en vis-à-vis du longeron correspondant, une boucle dirigée vers le haut en saillie de ladite extrémité, ladite boucle étant configurée pour s'engager sur le crochet correspondant lors du choc latéral.

Selon un mode avantageux de l'invention, le crochet comprend au moins deux parois transversales au longeron, fixées à une face intérieure du longeron via des pattes de fixation, les bords supérieurs desdites parois présentant un profil en forme de crochet.

Selon un mode avantageux de l'invention, les parois transversales forment un bord intérieur de contact avec l'extrémité du profilé correspondant lors du choc latéral, ledit bord étant préférentiellement incliné.

Selon un mode avantageux de l'invention, le fil métallique est en acier de module d'élasticité compris entre 300GPa et 600GPa et de diamètre compris entre 4mm et 10mm.

Selon un mode avantageux de l'invention, le ou chacun des profilés présente une hauteur moyenne suivant une direction verticale qui est comprise entre 20mm et 80mm.

Selon un mode avantageux de l'invention, les moyens anti-sous-marinage n'assurent de liaison entre le, ou chacun des profilés, et le longeron correspondant qu'à partir du choc latéral. Avant impact, les moyens anti-sous-marinage n'assurent aucune liaison entre le profilé et le longeron correspondant.

Avantageusement, le ou chacun des profilés pourvus des moyens anti-sous-marinage est un profilé arrière destiné à supporter un siège avant du véhicule.

L'invention a également pour objet un véhicule automobile comprenant un plancher, au moins un siège fixé sur le plancher, remarquable en ce que le plancher est conforme à l'invention, le ou les sièges étant fixés sur le ou les profilés.

Les mesures de l'invention sont intéressantes en ce que le plancher conforme à l'invention diminue la déformation du véhicule et améliore sa capacité d'absorption d'énergie en cas de choc latéral contre un poteau. En effet, au moins un des profilés comprend des moyens anti-sous-marinage du profilé sous le longeron correspondant en cas de choc latéral. Ces moyens sont aptes à réaliser une liaison entre le ou les profilés et le longeron correspondant de sorte à ce que de l'énergie peut être absorbée par le ou les profilés en cas de choc latéral. Ces mesures sont particulièrement intéressantes pour les planchers de véhicule présentant une faible hauteur, notamment au niveau des profilés transversaux. En effet, le phénomène de sous-marinage est d'autant plus présent que le profilé est de faible hauteur, car il peut alors plus facilement glisser sous le longeron.

D'autres caractéristiques et avantages de la présente invention seront mieux compris à l'aide de la description et des dessins parmi lesquels :
- La figure 1 est une illustration d'un test de choc latéral d'un véhicule automobile contre un poteau fixe à 75° et à 32 km/h ;
- La figure 2 est une vue de dessus d'un plancher de véhicule automobile conforme à l'invention ;
- La figure 3 est une vue de détail du plancher du véhicule automobile de la figure 2 ;

La figure 1 a été décrite précédemment en relation avec la discussion de l'état de l'art.

La figure 2 est une vue d'un plancher de véhicule automobile 2 conforme à l'invention. Le plancher 8 comprend un tunnel central 10, un longeron 12 disposé le long et à distance du tunnel central, une paroi 14 s'étendant transversalement depuis le tunnel central jusqu'au longeron, et un ou plusieurs profilés 16 s'étendant transversalement sur la paroi entre le tunnel et le longeron. On ne voit pas la partie opposée du plancher 8 par rapport à l'axe longitudinal L du véhicule, le plancher comprend cependant aussi en l'occurrence un longeron disposé le long et à distance du tunnel central 10 à l'opposé du longeron 12 visible sur la figure 2, une paroi s'étendant entre le tunnel et ce longeron à l'opposé ainsi qu'un ou plusieurs profilés s'étendant transversalement sur la paroi entre le tunnel central et ledit longeron à l'opposé. Le plancher comprend, en outre, des moyens 18 anti-sous-marinage du ou d'au moins un des profilés 16 sous le longeron correspondant 12 en cas de choc latéral. Les moyens 18 anti-sous-marinage sont aptes à réaliser une liaison entre le longeron 12 et le ou les profilés 16 lors du choc. En particulier, les moyens 18 anti-sous-marinage n'assurent une liaison entre le ou chacun des profilés 16, et le longeron 12 correspondant, qu'à partir du choc latéral. Le véhicule automobile 2 comprend, en outre, un ou plusieurs sièges (non représentés), le ou au moins un des sièges étant fixé sur un ou plusieurs profilés 16 du plancher. En particulier le véhicule peut comprendre un ou plusieurs sièges de taille basse ce qui indique que la ou les assises correspondantes sont abaissées par rapport à une hauteur courante. En l'occurrence au moins un des profilés 16 sur lequel un siège est fixé et au niveau duquel le plancher comprend un moyen 18 anti-sous-marinage peut présenter une hauteur moyenne suivant une direction verticale qui est comprise entre 20mm et 80mm. Cette hauteur sensiblement faible peut participer à l'abaissement de l'assise des sièges.

La figure 3 est une vue de détail des moyens anti-sous-marinage 18 du plancher 8 de la figure 2. On peut voir la paroi 14 du plancher 8, le profilé 16, le longeron 12 correspondant au profilé et les moyens anti-sous-marinage 18 situés en hauteur par rapport au profilé. En particulier, les moyens 18 anti-sous-marinage comprennent un fil métallique 20 soudé sur une portion principale 22 du profilé 16 et au moins un crochet 24 sur le longeron 12 correspondant. Le fil 20 est conformé de sorte à s'engager avec le crochet 24 lors du choc latéral. En particulier, le fil métallique 20 forme à l'extrémité 26 du profilé 16 qui est situé en vis-à-vis du longeron 12 correspondant, une boucle 28 dirigée vers le haut en saillie de l'extrémité 26. La boucle 28 formée par le fil métallique est configurée pour s'engager sur le crochet 24 correspondant lors du choc latéral. Le longeron 12 peut comprendre un ou plusieurs crochets 24 aptes à recevoir une boucle 28 de fil métallique fixée sur le profilé. En l'occurrence, le longeron 12 comprend un unique crochet 24 en vis-à-vis de la boucle de fil métallique. En particulier, le crochet 24 peut comprendre deux parois 30 transversales au longeron 12 et qui sont fixées à une face intérieure 32 du longeron 12 via des pattes 34 de fixation. Les bords supérieurs 36 des parois 30 présentent un profil en forme de crochet. On peut aussi observer que les parois transversales du crochet forment un bord intérieur 38 de contact avec l'extrémité 26 du profilé. Dans le mode de réalisation de l'invention ici présenté, la boucle métallique 28 vient s'engager en cas de choc latéral dans les formes 36 en crochet des parois transversales 30, et l'extrémité 26 du profilé vient en contact avec le bord intérieur 38 des parois. Le bord intérieur 38 des parois transversales 30 du crochet 24 peut être incliné pour favoriser lors du choc la tenue de la liaison entre la boucle et le crochet. Le fil métallique 20 peut être en acier de module d'élasticité compris entre 300GPa et 600GPa et de section comprise entre 4mm et 8mm, cette caractéristique favorisant l'absorption d'énergie par le fil en cas de choc. Cette mesure de l'invention est intéressante pour la tenue de la liaison entre la boucle et le crochet en cas de choc.

## Revendications

1. Plancher (8) de véhicule automobile (2) comprenant :
- un tunnel (10) central ;
- au moins un longeron (12) disposé le long et à distance du tunnel (10) central ;
- au moins une paroi (14) s'étendant transversalement depuis le tunnel (10) central jusqu'au longeron (12) ou un des longerons; et
- un ou plusieurs profilés (16) s'étendant transversalement sur la ou au moins une des parois (14) entre le tunnel (10) et le longeron (12) correspondant;
**caractérisé en ce qu'**il comprend, en outre :
des moyens anti-sous-marinage (18) du ou d'au moins un des profilés (16) sous le longeron (12) correspondant en cas de choc latéral, lesdits moyens étant aptes à réaliser une liaison entre le longeron (12) et le ou les profilés (16) lors dudit choc.

2. Plancher (8) selon la revendication 1, **caractérisé en ce que** les moyens anti-sous-marinage (18) sont situés en hauteur par rapport au(x) profilé(s) (16).

3. Plancher (8) selon l'une des revendications 1 et 2, **caractérisé en ce que** les moyens anti-sous-marinage (18) comprennent un fil métallique (20) soudé sur une portion principale (22) du ou de chacun des profilés (16) et au moins un crochet (24) sur le longeron (12) correspondant, ou vice versa, ledit fil étant conformé de sorte à s'engager avec ledit crochet (24) lors du choc latéral.

4. Plancher (8) selon la revendication 3, **caractérisé en ce que** le ou chacun des fils métalliques (20) forme, à l'extrémité du profilé (16) située en vis-à-vis du longeron correspondant, une boucle (28) dirigée vers le haut en saillie de ladite extrémité (26), ladite boucle étant configurée pour s'engager sur le crochet (24) correspondant lors du choc latéral.

5. Plancher selon l'une des revendications 3 et 4, **caractérisé en ce que** le crochet (24) comprend au moins deux parois transversales (30) au longeron, fixées à une face intérieure (32) du longeron (12) via des pattes (34) de fixation, les bords (36) supérieurs desdites parois présentant un profil en forme de crochet.

6. Plancher (8) selon la revendication 5, **caractérisé en ce que** les parois transversales (30) forment un bord intérieur (38) de contact avec l'extrémité (26) du profilé (16) correspondant lors du choc latéral, ledit bord (38) étant préférentiellement incliné.

7. Plancher (8) selon l'une des revendications 3 à 6, caractérisé en ce le fil métallique (20) est en acier de module d'élasticité compris entre 300GPa et 600GPa et de diamètre compris entre 4mm et 10mm.

8. Plancher (8) selon l'une des revendications 1 à 7, **caractérisé en ce que** le ou chacun des profilés (16) présente une hauteur moyenne suivant une direction verticale qui est comprise entre 20mm et 80mm.

9. Plancher (8) selon l'une des revendications 1 à 8, **caractérisé en ce que** les moyens anti-sous-marinage (18) n'assurent de liaison entre le, ou chacun des profilés (16), et le longeron (12) correspondant qu'à partir du choc latéral.

10. Véhicule automobile (2) comprenant un plancher (8), au moins un siège fixé sur le plancher, **caractérisé en ce que** le plancher (8) est conforme à l'une des revendications 1 à 9, le ou les sièges étant fixés sur le ou les profilés (16).

## Patentansprüche

1. Boden (8) eines Kraftfahrzeugs (2), der Folgendes umfasst:
- einen zentralen Tunnel (10);
- mindestens einen Längsträger (12), der entlang des zentralen Tunnels (10) und von ihm beabstandet angeordnet ist;
- mindestens eine Wand (14), die sich quer von dem zentralen Tunnel (10) bis zu dem Längsträger (12) oder einem der Längsträger erstreckt; und
- ein oder mehrere Profile (16), die sich quer auf der Wand oder mindestens einer der Wände (14) zwischen dem Tunnel (10) und dem entsprechenden Längsträger (12) erstrecken;
**dadurch gekennzeichnet, dass** er außerdem Folgendes umfasst:
Anti-Durchtauchmittel (18) des oder mindestens eines der Profile (16) unter dem entsprechenden Längsträger (12) bei Seitenaufprall, wobei die Mittel geeignet sind, eine Verbindung zwischen dem Längsträger (12) und dem oder den Profilen (16) bei dem Aufprall herzustellen.

2. Boden (8) nach Anspruch 1, **dadurch gekennzeichnet, dass** die Anti-Durchtauchmittel (18) in Bezug auf das/die Profil(e) (16) hoch liegen.

3. Boden (8) nach einem der Ansprüche 1 und 2, **dadurch gekennzeichnet, dass** die Anti-Durchtauchmittel (18) einen Metalldraht (20) umfassen, der auf einen Hauptabschnitt (22) des oder jedes der Profile (16) geschweißt ist, und mindestens einen Haken (24) auf dem entsprechenden Längsträger (12) oder umgekehrt, wobei der Draht derart ausgebildet ist, dass er mit dem Haken (24) bei dem Seitenaufprall ineinandergreift.

4. Boden (8) nach Anspruch 3, **dadurch gekennzeichnet, dass** der oder jeder der Metalldrähte (20) an dem Ende des Profils (16), das gegenüber dem entsprechenden Längsträger liegt, eine Schleife (28) bildet, die nach oben von dem Ende (26) vorragend gelenkt ist, wobei die Schleife konfiguriert ist, um auf dem entsprechenden Haken (24) bei dem Seitenaufprall einzugreifen.

5. Boden nach einem der Ansprüche 3 und 4, **dadurch gekennzeichnet, dass** der Haken (24) mindestens zwei Wände (30), die zu dem Längsträger quer sind, umfasst, die an einer Innenfläche (32) des Längsträgers (12) über Befestigungspratzen (34) befestigt sind, wobei die oberen Ränder (36) der Wände ein Profil in Hakenform aufweisen.

6. Boden (8) nach Anspruch 5, **dadurch gekennzeichnet, dass** die Querwände (30) einen Innenrand (38) zur Berührung mit dem Ende (26) des entsprechenden Profils (16) bei dem Seitenaufprall bilden, wobei der Rand (38) vorzugsweise geneigt ist.

7. Boden (8) nach einem der Ansprüche 3 bis 6, **dadurch gekennzeichnet, dass** der Metalldraht (20) aus Stahl mit einem Elastizitätsmodul zwischen 300 GPa und 600 GPa und einem Durchmesser zwischen 4 mm und 10 mm besteht.

8. Boden (8) nach einem der Ansprüche 1 bis 7, **dadurch gekennzeichnet, dass** das oder jedes der Profile (16) eine mittlere Höhe entlang einer vertikalen Richtung, die zwischen 20 mm und 80 mm liegt, aufweist.

9. Boden (8) nach einem der Ansprüche 1 bis 8, **dadurch gekennzeichnet, dass** die Anti-Durchtauchmittel (18) eine Verbindung zwischen dem oder jedem der Profile (16) und dem entsprechenden Längsträger (12) erst ab dem Seitenaufprall sicherstellen.

10. Kraftfahrzeug (2), das einen Boden (8), mindestens einen Sitz, der auf dem Boden befestigt ist, umfasst, **dadurch gekennzeichnet, dass** der Boden (8) einem der Ansprüche 1 bis 9 entspricht, wobei der oder die Sitze auf dem oder den Profilen (16) befestigt sind.

## Claims

1. A floor (8) of a motor vehicle (2) including:
- a central tunnel (10);
- at least one longitudinal side rail member (12) arranged along and at a distance from the central tunnel (10);
- at least one wall (14) extending transversely from the central tunnel (10) as far as the longitudinal side rail member (12) or one of the longitudinal side rail members; and
- one or more profile sections (16) extending transversely on the or at least one of the walls (14) between the tunnel (10) and the corresponding longitudinal side rail member (12);
**characterized in that** it further includes:
anti-submarining means (18) of the or of at least one of the profile sections (16) under the corresponding longitudinal side rail member (12) in the event of a side impact, said means being able to create a connection between the longitudinal side rail member (12) and the profile section or sections (16) during said impact.

2. The floor (8) according to Claim 1, **characterized in that** the anti-submarining means (18) are situated above with respect to the profile section(s) (16).

3. The floor (8) according to one of Claims 1 and 2, **characterized in that** the anti-submarining means (18) include a metal wire (20) welded on a main portion (22) of the or each of the profile sections (16) and at least one hook (24) on the corresponding longitudinal side rail member (12), or vice versa, said wire being shaped so as to engage with said hook (24) during the side impact.

4. The floor (8) according to Claim 3, **characterized in that** the or each of the metal wires (20) forms, at the end of the profile section (16) situated opposite the corresponding longitudinal side rail member, a loop (28) directed upwards projecting from said end (26), said loop being configured to engage on the corresponding hook (24) during the side impact.

5. The floor according to one of Claims 3 and 4, **characterized in that** the hook (24) includes at least two transverse walls (30) to the longitudinal side rail member, which are attached to an interior face (32) of the longitudinal side rail member (12) via attachment lugs (34), the upper edges (36) of said walls presenting a hook-shaped profile.

6. The floor (8) according to Claim 5, **characterized in that** the transverse walls (30) form an interior contact edge (38) with the end (26) of the corresponding profile section (16) during the side impact, said edge (38) being preferably inclined.

7. The floor (8) according to one of Claims 3 to 6, **characterized in that** the metal wire (20) is made of steel with a modulus of elasticity comprised between 300GPa and 600GPa and with a diameter comprised between 4mm and 10mm.

8. The floor (8) according to one of Claims 1 to 7, **characterized in that** the or each of the profile sections (16) has a mean height along a vertical direction which is comprised between 20mm and 80mm.

9. The floor (8) according to one of Claims 1 to 8, **characterized in that** the anti-submarining means (18) only ensure a connection between the, or each of the profile sections (16) and the corresponding longitudinal side rail member (12) starting from the side impact.

10. A motor vehicle (2) including a floor (8), at least one seat attached to the floor, **characterized in that** the floor (8) is in accordance with one of Claims 1 to 9, the seat or seats being attached to the profile(s) (16) .
